(19) **Europäisches Patentamt**
**European Patent Office**
**Office européen des brevets**

(11) **EP 4 038 411 B1**

(12) **EUROPÄISCHE PATENTSCHRIFT**

(45) Veröffentlichungstag und Bekanntmachung des Hinweises auf die Patenterteilung:
**30.07.2025 Patentblatt 2025/31**

(21) Anmeldenummer: **21805933.5**

(22) Anmeldetag: **03.11.2021**

(51) Internationale Patentklassifikation (IPC):
**G01S 11/02** *(2010.01)* **G01S 11/08** *(2006.01)*

(52) Gemeinsame Patentklassifikation (CPC):
**G01S 11/02; G01S 11/08**

(86) Internationale Anmeldenummer:
**PCT/EP2021/080518**

(87) Internationale Veröffentlichungsnummer:
**WO 2022/096509 (12.05.2022 Gazette 2022/19)**

(54) **VERFAHREN ZUR ENTFERNUNGSBESTIMMUNG MITTELS HOCHAUFLÖSENDER VERFAHREN AUF BASIS VON SIGNALLAUFZEITMESSUNGEN**

METHOD FOR DETERMINING A DISTANCE USING A HIGH-RESOLUTION METHOD BASED ON SIGNAL PROPAGATION TIME MEASUREMENTS

PROCÉDÉ DE DÉTERMINATION D'UNE DISTANCE SELON UN PROCÉDÉ À HAUTE RÉSOLUTION BASÉ SUR DES MESURES DE TEMPS DE PROPAGATION DE SIGNAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.11.2020 PCT/EP2020/081013**

(43) Veröffentlichungstag der Anmeldung:
**10.08.2022 Patentblatt 2022/32**

(73) Patentinhaber: **Lambda: 4 Entwicklungen GmbH 22299 Hamburg (DE)**

(72) Erfinder: **REIMANN, Rönne 22769 Hamburg (DE)**

(74) Vertreter: **Raffay & Fleck Patentanwälte Stephansplatz 2-6 20354 Hamburg (DE)**

(56) Entgegenhaltungen:
EP-A1- 2 525 238      EP-B1- 2 525 238
WO-A1-2020/060686      WO-A2-2010/025273
US-A1- 2014 320 335      US-B2- 9 726 762

**Beschreibung**

Die Erfindung betrifft ein Verfahren zur Entfernungsbestimmung mittels hochauflösender Verfahren auf Basis von Signallaufzeitmessungen.

Es ist bekannt, mittels mathematischer Verfahren mit hoher Genauigkeit Entfernungen aus Funksignalen zu bestimmen, beispielsweise mittel MUSIC oder CAPON oder wie aus der EP 3 564 707, EP 3 502 736 A1 oder EP 2 212 705 bekannt.

In EP2525238A1 und WO2020060686A1 werden Systeme zur Bestimmung des Abstands zwischen zwei Geräten beschrieben. Eine Entfernungsschätzungseinheit extrahiert zunächst die Phase der Frequenzsignale und berechnet dann eine Laufzeitverzögerungszeit zwischen den beiden Geräten auf der Grundlage jeder extrahierten Phases und schätzt die Entfernung.

Diese Verfahren setzten in der Regel aber Phasenmessungen voraus. Aufgabe der Erfindung ist es, derartige Methoden auch bei reinen Laufzeitmessungen anwenden zu können.

Gelöst wird dies dadurch, dass aus Laufzeitmessungen und Amplitudenmessungen und/oder Laufzeitmessungen und Leistungsmessungen komplexe Zahlen konstruiert werden, mittels derer der Einstieg in bekannte Verfahren ermöglicht wird. Gelöst wird die Aufgabe auch durch ein Verfahren zur Abstandsbestimmung zwischen zwei Objekten auf Basis einer Mehrzahl von Funksignallaufzeitmessungen bei einer Mehrzahl unterschiedlicher Frequenzen zwischen den zwei Objekten. Gelöst wird die Aufgabe auch durch die Verwendung von aus Signallaufzeitmessungen zwischen zwei Objekten bei unterschiedlichen Frequenzen rechnerisch gewonnen Phasenwerten für die unterschiedlichen Frequenzen und/oder Argumente komplexer Zahlen für die unterschiedlichen Frequenzen zur Bestimmung eines Abstandes zwischen den zwei Objekten mittels phasenbasierten Abstandsberechnungsmethoden und/oder auf komplexen Zahlen basierenden Abstandsberechnungsmethoden.

Eine solche Konstruktion oder Gewinnung der Phasenwerte bzw. von Argumenten der komplexen Zahlen aus einer Signallaufzeit, insbesondere Pulslaufzeit (ToF) und deren Messung anstelle einer Phasenmessung erfolgt somit allein aus reinen Laufzeitmessungen, insbesondere Pulslaufzeitmessungen bzw. ToF-Messungen. Die komplexe Zahl wird insbesondere allein auf Grundlage von Laufzeitmessungen, insbesondere Pulslaufzeitmessungen bzw. ToF-Messungen, sowie Amplitudenmessungen und/oder Laufzeitmessungen, insbesondere Pulslaufzeitmessungen bzw. ToF-Messungen und Leistungsmessungen gewonnen. Insbesondere sind somit Phasenmessungen nicht notwendig, um die komplexen Zahlen zu konstruieren, zu bestimmen bzw. rechnerisch zu gewinnen. Insbesondere wird zur rechnerischen Gewinnung der komplexen Zahl und/oder der rechnerisch Gewinnung der Phasenwerte keine Phasenmessung eines Funksignals verwendet.

Es wird bevorzugt mindestens ein erstes Funksignal mit einer Mehrzahl unterschiedlicher Frequenzen von einem ersten Objekt zu einem zweiten gesendet und am zweiten Objekt empfangen. Bevorzugt werden an diesem mindestens einen ersten Funksignal zumindest ein Teil der oder alle der Funksignallaufzeitmessungen vorgenommen. In einer bidirektionalen Ausgestaltung wird auch mindestens ein zweites Funksignal mit einer Mehrzahl unterschiedlicher Frequenzen von dem zweiten Objekt zu dem ersten Objekt gesendet und am ersten Objekt empfangen. Bevorzugt werden an diesem mindestens einen zweiten Funksignal zumindest ein Teil der oder alle der Funksignallaufzeitmessungen vorgenommen. Insbesondere werden die Funksignallaufzeitmessungen an dem mindestens einen ersten Funksignal und dem mindestens einen zweiten Funksignal vorgenommen. Insbesondere werden die Funksignallaufzeitmessungen an Funksignalantielen vorgenommen, die unterschiedliche Frequenzen aufweisen. Insbesondere bilden das mindestens eine erste Funksignal und das mindestens eine zweite Funksignal das mindestens eine Funksignal. Insbesondere wird bei jeder Frequenz des mindestens einen Funksignal mindestens eine Funksignallaufzeitmessung vorgenommen.

Insbesondere wird bei jeder Funksignallaufzeitmessung und/oder an einem ähnlichen Signalteil und/oder in zeitlicher Nähe zu jeder Funksignallaufzeitmessung auch eine Amplituden- und/oder Leistungsmessung am mindestens einen Funksignal vorgenommen.

Bevorzugt weist dazu mindestens eins der zwei Objekte Mittel zum Senden des mindestens einen Funksignals auf, insbesondere Mittel zum Generieren des Signals, Mittel zum Verstärken des Signals und/oder Mittel zum Abstrahlen des Signals, insbesondere mindestens eine Antenne. Dazu weist darüber hinaus mindestens das andere der zwei Objekte Mittel zum Empfangen und Vermessen des mindestens einen Funksignals auf, insbesondere mindestens eine Antenne, und/oder Mittel zum Verstärken des empfangenen Funksignals und/oder Mittel zum Bestimmen der Amplitude und/oder Leistung des Funksignals. Insbesondere weisen die Objekte zusammen Mittel zur Laufzeitmessung auf. Dazu weisen insbesondere beide Objekte Zeitgeber oder Uhren auf und sind die Objekte insbesondere eingerichtet, die Uhren oder Zeitgeber abzugleichen und/oder zu vergleichen und/oder zu synchronisieren.

Das erfindungsgemäße Verfahren ist insbesondere dadurch gekennzeichnet, dass aus den Funksignallaufzeitmessungen Phasenwerte für unterschiedliche Frequenzen und/oder Argumente komplexer Zahlen für unterschiedliche Frequenzen bestimmt werden. Dies erfolgt insbesondere rechnerisch.

Phasenwerte für unterschiedliche Frequenzen und/oder Argumente komplexer Zahlen für unterschiedliche Frequenzen zeichnen sich insbesondere dadurch aus, dass sie als Phasenmesswerte oder komplexe Zahlen in, insbesondere vorbekannten, mathematischen Verfahren zur phasenbasierten Abstandsberechnung verwendet werden können, um einen Abstand zwischen den zwei Objekten zu bestimmen. In einer bevorzugten Ausgestaltung beinhaltet das Verfahren auch ihre Verwendung in, insbesondere vorbekannten, mathematischen Verfahren zur phasenbasierten Abstandsberechnung, um einen Abstand zwischen den zwei Objekten zu bestimmen und insbesondere auch die Berechnung des Abstandes.

Mit besonderem Vorteil werden zu der Mehrzahl von Funksignallaufzeitmessungen auch Amplituden- und/oder Leistungsmessungen bei der Mehrzahl unterschiedlicher Frequenzen vorgenommen, wobei eine zur Amplitude oder Leistung proportionale Zahl als Amplitude oder Betrag der komplexen Zahl in, insbesondere bekannten, mathematischen Verfahren zur phasenbasierten Abstandsberechnung oder auf komplexen Zahlen basierenden mathematischen Verfahren verwendet werden können oder verwendet werden, um einen Abstand zwischen den zwei Objekten zu bestimmen. Dieses Vorgehen erweitert die Einsatzmöglichkeit des Verfahrens.

Bevorzugt werden Funksignallaufzeiten der Funksignallaufzeitmessungen bei, insbesondere benachbarten der Mehrzahl unterschiedlicher, Frequenzen zur Berechnung eines auf den Abstand der Frequenzen der Messungen der Funklaufzeiten normierten Phasenverschiebungsunterschieds verwendet. Bevorzugt wird das jeweilige Argument der komplexen Zahlen bei einer Frequenz und/oder der Phasenwert bei einer Frequenz als durch den mit dem Frequenzabstand gewichteten bis zu dieser Frequenz aufsummierten Phasenverschiebungsunterschied angenommen.

Mit Vorteil wird zur Funksignallaufzeitmessung mindestens ein Funksignal mit der Mehrzahl unterschiedlicher Frequenzen von einem ersten der zwei Objekte zu einem zweiten der zwei Objekte und/oder umgekehrt gesendet, wobei insbesondere zwischen mindestens zwei der Mehrzahl unterschiedlicher Frequenzen phasenkohärent umgeschaltet wird und/oder so umgeschaltet wird das der Phasensprung am Sender bekannt ist und/oder gemessen wird. Mit Vorteil schaltet nicht nur das sendende Objekt phasenkohärent sondern auch das empfangene, insbesondere wird in jedem Objekt eine PLL phasenkohärent geschaltet. Der Phasenunterschied oder Phasensprung entsteht beim Umschalten zwischen zwei Frequenzen in der Regel, aus technischen Gründen, kann aber auch vermieden werden. Dabei kann das Umschalten zwischen zwei Frequenzen mit kurzer Unterbrechung oder unterbrechungsfrei durchgeführt werden. Zum Zeitpunkt des unterbrechungsfreien Wechsels springt die Phase bzw. während des Wechselns mit Unterbrechung springt die Phase der gedacht in die Unterbrechung fortgedachten Signale vor und nach dem Umschalten. Zu dem Wechselzeitpunkt ohne Unterbrechung oder zu einem gedachten Wechselzeitpunkt in der Unterbrechung, insbesondere in der Mitte der Unterbrechung und/oder am Ende des Signals vor der Unterbrechung oder am Beginn des Signals nach der Unterbrechung, liegt ein definierter Phasensprung vor. Dieser ist der Phasenunterschied.

Unter phasenkohärentem Umschalten oder Wechsel zwischen zwei Frequenzen wird insbesondere verstanden, dass die Phase nach der Umschaltung relativ zur Phasenlage vor der Umschaltung bekannt ist. Dies ist der Fall, wenn die Veränderung der Phase beim Umschalten null ist oder einen vorbekannten oder ermittelbaren Wert beträgt. Dadurch lassen sich weitere Messungen der Phase am Sender vermeiden und die Berechnung vereinfachen, insbesondere wenn ohne Phasenveränderung zwischen Frequenzen gewechselt wird. Hilfsweise kann aber auch nicht phasenkohärent geschaltet und die Änderung der Phase lokal, insbesondere also beim Sender vor der Übertragung und/oder beim Empfänger bezüglich der PLL des Empfängers, bestimmt werden und diese Änderung in der Berechnung korrigiert werden.

Mit Vorteil kann das Verfahren in manchen Anwendungen einseitig geführt werden was gerade ein großer Vorteil gegenüber originär phasenbasierten Messungen darstellt, die in der Regele durch bidirektionalen Austausch erfolgen müssen. So kann es bevorzugt sein, die für das erfindungsgemäße Verfahren verwendeten Funksignallaufzeitmessungen nur an Funksignalen, die von einem ersten der zwei Objekte gesendet und an einem zweiten der zwei Objekte empfangen werden, erfolgen. Die Entscheidung, welche Funksignale, vom ersten oder zweiten gesendeten kann Teil des Verfahrens sein und wird insbesondere so ausgeführt, dass die beim Empfang weniger gestörten Signale verwendet werden. Die Entscheidung kann auch für Frequenzen oder Frequenzspannen separat gefällt werden. Die Entscheidung kann vor oder nach dem teilweise oder vollständigen Übertragen der Funksignale von erstem zum zweiten und/oder vom zweiten zum ersten Objekt erfolgen.

Mit Vorteil in machen Szenarien wir das Verfahren so geführt, dass das zweite Objekt keine Signale zur Entfernungsbestimmung sendet und/oder das zweite Objekt Signale nur zur Zeit- und/oder Taktsynchronisation sendet oder abgesehen von Zeit- und/oder Taktsynchronisation passiv ist.

Mit besonderem Vorteil wird das Verfahren so geführt, dass das erste und/oder zweite der zwei Objekte die mehreren Frequenzen nacheinander und/oder aufeinanderfolgend, insbesondere unmittelbar aufeinanderfolgend, abstrahlt und/oder wobei die Bandbreite der Signale zu keiner Zeit 50 MHz, insbesondere 25 MHz, übersteigt. Dadurch lassen sich einfache Bauteile verwenden und Störungen minimieren.

Besonders bevorzugt wird vor, nach und/oder während der Durchführung des Verfahrens mindestens eine Zeit- und/oder Takt- und/oder Zeitdriftsynchronisation und/oder -korrektur zwischen den zwei Objekten durchgeführt. Dies erhöht die Genauigkeit. Mit Vorteil wird eine Zeitdrift und/oder ein Zeitdriftunterschied der zwei Objekte mindestens eines der beiden Objekte bestimmt und/oder korrigiert und/oder bei der Berechnung des Abstandes berücksichtigt.

Mit besonderem Vorteil wird der Frequenzabstand zwischen zwei aufeinander folgenden der unterschiedlichen Frequenzen mit mindestens 0,1 MHz und/oder maximal 17 MHz, insbesondere maximal 10 MHz, gewählt und/oder beträgt die Anzahl der unterschiedlichen Frequenzen mindestens fünf Frequenzen und/oder maximal 200 Frequenzen und/oder überspannen die unterschiedlichen Frequenzen ein Frequenzband von mindestens zwei MHz und/oder maximal 100 MHz überspannen. Dies hat sich in der Praxis als ausreichend für große Genauigkeiten herausgestellt und erfordert zum anderen nur überschaubar komplexe Aufbauten und nur vertretbare Frequenzbänder.

Mit Vorteil werden bei der Abstandsbestimmung am zweiten oder ersten Objekt empfangene Funksignale mit einer empfangenen Leistung unterhalb einer vorbestimmten und/oder, insbesondere aus oder unter Berücksichtigung der empfangenen Funksignale, ermittelten Leistungsuntergrenze unberücksichtigt gelassen, insbesondere bleiben solche Funksignale unberücksichtigt, die mehr als 50% unter der mittleren Leistung der empfangenen Funksignale liegen. Alternativ oder zusätzlich werden wobei bei der Abstandsbestimmung am zweiten oder ersten Objekt empfangene Funksignale mit einer Leistung oberhalb einer vorbestimmten und/oder, insbesondere aus oder unter Berücksichtigung der empfangenen Funksignale, ermittelten Leistungsobergrenze unberücksichtigt gelassen.

In einer anderen Ausgestaltung werden aus den, insbesondere in der Entscheidung ausgewählten, Signalen die x% der Signale mit kleinster empfangener Amplitude aussortiert und nicht verwendet und/oder die y% der Signale mit größter empfangener Amplitude aussortiert und nicht verwendet. Als besonders vorteilhaft hat es sich erwiesen, wenn die Summe aus x und y 10 nicht unterschreitet und/oder 75 nicht überschreitet und/oder x im Bereich von 10 bis 75 und/oder y im Bereich von 20 bis 50 liegt. Mit diesen Werten lässt sich in den meisten Situationen eine hohe Genauigkeit und eine zuverlässige Abstandsbestimmung erreichen.

Bei entsprechender Anforderung wird das Verfahren vorteilhaft so geführt, dass das Verfahren zwischen einer Mehrzahl von Paaren von Objekten durchgeführt, wird, wobei insbesondere ein Objekt jedes Paares ein Objekt ist, dass an allen Paaren beteiligt ist, und wobei die ermittelten Abstände der Paare verwendet werden, um eine Kartierung und/oder Positionsbestimmung durchzuführen.

Mit Vorteil wird für jedes am zweiten und/oder ersten Objekt empfangene Funksignale ein zu dessen Amplitude oder Leistung proportionalen Wert und ein Phasenwert bestimmt und insbesondere daraus jeweils eine komplexe Zahl bestimmt, die für die Abstandsbestimmung zwischen dem ersten und dem zweiten Objekt genutzt wird.

Der Phasenwert oder Argument wird insbesondere dadurch bestimmt, dass bezüglich einer Vielzahl von Paaren der Funksignale mit, insbesondere benachbarter, Frequenz jeweils eine auf einen Frequenzabstand normierte Phasenverschiebungsänderung berechnet wird, also näherungsweise die Ableitung der Phasenverschiebung an einer der oder den Frequenzen des Paars berechnet wird. Dazu wird zunächst die Phasenverschiebung für die Frequenzen des jeweiligen Paars aus der Signallaufzeit berechnet, was über den Zusammenhang zwischen Frequenz und Wellenlänge und Ausbreitungsgeschwindigkeit direkt möglich ist, beispielsweise über den Zusammenhang:

$$\text{Phasenverschiebung} = 2\,Pi * (2{*}Entfernung) * Frequenz / c$$

$$RTT = 2 * Entfernung / c$$

und daraus folgend:

$$\text{Phasenverschiebung} = 2\,Pi * (RTT{*}c) * Frequenz / c$$

Dabei ist Phasenverschiebung eine Phasenverschiebung bei der Übertragung bei der Frequenz von einem Objekt zum anderen und zurück, die aufgrund der Entfernung auftritt. Sie kann näherungsweise gleichgesetzt werden mit dem Doppelten der Phasenverschiebung, die bei der Übertragung bei der Frequenz von einem Objekt zum anderen aufgrund der Entfernung auftritt.

Dann oder diesen Schritt überspringend werden die bevorzugt (normierte) Phasenverschiebungsänderungen (dPhasenverschiebung) zwischen zwei benachbarten Frequenzen bestimmt, zum Beispiel mittels

$$dPhasenverschiebung(f1,f2) = Pi * (RTT{*}c) * dFrequenz(f1,f2) / c$$

Dabei kann als RTT die doppelte Signallaufzeit oder die Signalrundlaufzeit zwischen erstem und zweitem Objekt bei einer zu den Frequenzen f1 und/oder f2 ähnlichen Frequenz verwendet werden, oder eine Mittelung von Signallaufzeiten bei ähnlichen Frequenzen.

Frequenzen werden insbesondere als ähnlich angesehen, wenn Sie um weniger als 17MHz, insbesondere 9 MHz, insbesondere weniger als 2 MHz, und/oder weniger als 5%, insbesondere weniger als 2%, der niedrigeren Frequenz voneinander abweichen.

Unter einem Frequenzhopping ist insbesondere das aufeinander folgende Senden auf unterschiedlichen Frequenzen zu verstehen.

Insbesondere liegen die Frequenzen, insbesondere des Frequenzhoppings, in einer Spanne von 25 bis 100 MHz, insbesondere überspannen Sie eine solche Spanne vollständig. Insbesondere liegen die Frequenzen, insbesondere des Frequenzhoppings, im Bereich von 2 bis 6 GHz. Insbesondere liegt zwischen benachbarten aber nicht notwendig aufeinanderfolgenden Frequenzen, insbesondere des Frequenzhoppings, ein Abstand im Bereich von 0,1 bis 10 MHz, insbesondere im Bereich von 0,5 bis 10 MHz. Insbesondere weisen die Frequenzen, zwischen denen eine Änderung der Phasenverschiebung berechnet wird einen Abstand im Bereich von 0,1 bis 10 MHz, insbesondere im Bereich von 0,5 bis 10 MHz, insbesondere bis 2 MHz auf.

Benachbarte Frequenzen sind insbesondere die in der Mehrzahl unterschiedlicher Frequenzen nebeneinander liegenden Frequenzen, insbesondere die nebeneinander liegenden, die von einem der Objekte gesendet wurden, sie sind bevorzugt ähnlich.

Die dadurch gesammelten normierte Phasenverschiebungsänderungswerte werden bevorzugt zur Bestimmung der Phase der komplexen Zahl an der jeweiligen Frequenz (der zugehörig zu dem zur Amplitude proportionalen Wertes) und/oder der Phasenwerte an der jeweiligen Frequenz verwendet, insbesondere durch näherungsweise Integration über die Frequenz und/oder gewichtete Aufsummierung über die Frequenz. Dabei muss nicht bei f = 0 Hz mit der Integration oder Aufsummierung begonnen werden, sondern kann und wird bevorzugt, ein allen komplexen Zahlen oder Phasenwerten gemeinsamer Offset verwendet, insbesondere die niedrigste Frequenz der, insbesondere ausgewählten, Mehrzahl unterschiedlicher Frequenzen.

Insbesondere wird der Phasenwert somit aus der Signallaufzeit oder Signalrundlaufzeit bestimmt.

Insbesondere wird die Phasenverschiebungsänderung (dPhaseverschiebung(fb,fa)) gewonnen mittels der Formel:

$$dPhaseverschiebung(fb,fa) \ = \ k1 \ * \ RTT(fm) \ * \ dFrequenz(fb,fa)$$

oder

$$dPhaseverschiebung(fb,fa) \ = \ k2 \ * \ STT(fm) \ * \ dFrequenz(fb,fa)$$

wobei dFrequenz(fb,fa) die Differenz zwischen den Frequenzen fb und fa ist RTT(fm) die doppelte Signallaufzeit oder die Signalrundlaufzeit bzw. STT(fm) die halbe Signallaufzeit oder die halbe Signalrundlaufzeit zwischen ersten und zweitem Objekt bei einer oder mehreren Frequenzen fm, ähnlich zu fb und/oder fa und/oder andersherum ist und wobei k1, k2 jeweils eine Konstante ist, insbesondere gleich Pi und k2 gleich 2 Pi ist.

f(m) ist dabei die Frequenz, bei der die Laufzeitmessung durchgeführt wurde, fb und fa sind zwei so gewählte Frequenzen, dass fb ungleich fa ist und fb ähnlich zu fa und fm ist. Dabei gilt insbesondere, dass fb größer als fa und/oder fa kleiner fm und/oder fb größer fm ist. Bei fb und fa müssen keine Messungen stattfinden. Diese oder besser die zwischen Ihnen zu erwartende Änderung Phasenverschiebung werden aus der Messung bei fm über obige Formel konstruiert.

Der komplexe Wert Z für eine Frequenz ergibt sich dann insbesondere mittels:

Betrag(Z(f)) = (k3* Amplitude(fm) + offset), mit f ähnlich zu fm und mit möglichst geringem Abstand zu fm und bevorzugt einheitlich möglichst größer oder kleiner fm oder als Mittelwert von Amplituden bei benachbarten und/oder ähnlichen Frequenzen Argument(Z(f)) = Summe(dPhasenverschiebung(f(n + 1),fn)) über fn von f0 bis f(n+1) = f.

mit offset einer Konstante, insbesondere gleich 0 und/oder k3 einer Kosntante, insbesondere gleich 1.

Es werden also die Änderungen der Phasenverschiebung aufsummiert und zwar von der niedrigsten Frequenz bis zur fraglichen Frequenz, für die die komplexe Zahl bestimmt werden soll. Dabei ist die niedrigste Frequenz für alle komplexen Zahlen näherungsweise gleich, insbesondere identisch. Zudem sind die Phasenverschiebungsänderungen insbesondere immer für aufeinanderfolgende Frequenzpaare aufzusummieren, bei denen die höhere Frequenz näherungsweise gleich, insbesondere identisch zu der niedrigeren der Frequenzen des nächsten Paares ist, also insbesondere dPhasenverschiebung(f1,f0) + dPhasenverschiebung(f2,f1) + dPhasenverschiebung(f3,f2) + .... + dPhasenverschiebung(f,fn)

$$\text{mit } f = f(n+1)$$

f0 ist dabei für alle komplexen Zahlen eines Vektors und/oder einer Matrix näherungsweise gleich, insbesondere gleich.

Je enger die Schritte der realen Messung, also der verfügbaren fm sind, desto kleiner kann die Schrittweite in der Folge f0 bis f gewählt werden und desto genauer ist das Verfahren.

Wird beispielsweise wir folgt gemessen

| F1 | STT1 (STT = Signallaufzeit) |
|----|------|
| F2 | STT2 |
| F3 | STT3 |
| F4 | STT4 |
| ... | ... |
| Fn | STTn |

Und ist der Abstand zwischen den benachbarten Frequenzen äquidistant mit dem Abstand 2d, gilt also F1 + 2 *d = F2, F2 + 2 * d = F3 usw. Dann kann man bilden:

$$dPhaseverschiebung(F1+d, F1\text{-}d) = k1 * 2 * STT(F1) * 2d,$$

allgemein

$$dPhaseverschiebung(Fn+d, Fn - d) = k1 * 2 * STT(Fn) * 2d,$$

Dann bildet man beispielsweise

$$Betrag(Z(fn + d)) = (k3* Amplitude(Fn) + offset)$$

und

Argument(Z(fn +d)) = Summe(dPhaseverschiebung (fs + d,fs - d)) über fs von F1 bis Fn

Sind die Abstände nicht äquidistant wählt man als die Frequenzen fa und fb insbesondere als niedrigste eine Frequenz insbesondere leicht unter der niedrigsten Messfrequenz und dann fortwährend Frequenzen, insbesondere mittig, zwischen den aufsteigenden Messfrequenzen, liegen. k1 ist insbesondere konstant gleich Pi und/oder k3 ist insbesondere gleich 1 und/oder offset insbesondere gleich 1 .

Die Konstanten sind insbesondere für die Berechnung alle komplexen Zahlen eines Vektors oder einer Matrix identisch.

Die komplexen Zahlen werden insbesondere zur Bildung eines komplexen Vektors gebildet, der insbesondere aus den komplexen Zahlen als eine Zeilen- oder Spaltenwerte gebildet ist. Aus dem komplexen Vektor wird dann insbesondere eine Autokorrelationsmatrix erstellt. Diese kann dann für bekannte Verfahren zur Entfernungsbestimmung verwendet werden, die auf einer solchen Autokorrelationsmatrix basieren, wie CAPON, MUSIK oder die virtuelle Abstandsberechnung zu Abstrahl- oder Empfangscharakteristiken, insbesondere Gruppen von Matrizen.

Wie oben beschrieben werden also die Phasenverschiebungsänderungen aufsummiert und zwar von der niedrigsten Frequenz oder einer festgelegten Anfangsfrequenz bis zur fraglichen Frequenz für die die komplexe Zahl oder der Phasenwert, der gleich dem Argument der komplexen Zahlt ist, bestimmt werden soll.

Insbesondere wird aus einer Mehrzahl der komplexen Zahlen eine Matrix, insbesondere eine Autokorrelationsmatrix gebildet und mittels dieser und mittels, insbesondere bekannter, Methoden, beispielsweise MUSIC, CAPON, Vergleich mit, Abstandsberechnung zu und/oder Projektion auf Abstrahl- und- oder Empfangscharakteristika, der Abstand bestimmt. Mit Vorteil erfolgt die Abstandsberechnung mittels Eigenwert- oder Eigenvektorenbestimmung der mindestens einen Matrix und/oder Fouriertransformation der komplexen Werte.

Derartige Vorgehensweisen sind insbesondere bei Multipath-Signalausbreitung vorteilhaft, um eine zuverlässige Bestimmung zu erreichen.

Die Berechnung lässt sich beispielhaft wie folgt veranschaulichen:

Alle Signalrundlaufzeiten oder doppelten Signallaufzeiten (RTT) werden jeweils in eine Phasenverschiebung umgerechnet und dann werden für Paare von Phasenverschiebungen Phasenverschiebungsdifferenzen oder Phasenverschiebungsableitungen bestimmt:

$$\text{dPhasenverschiebung}(f1,f2) = 2\,Pi * (2*\text{Entfernung}) * \text{dFrequenz}(f1,f2) / c$$

$$RTT = 2 * \text{Entfernung} / c$$

$$\text{dPhasenverschiebung}(f1,f2) = 2\,Pi * (RTT*c) * \text{dFrequenz}(f1,f2) / c$$

Dabei ist dPhasenverschiebung eine Phasenverschiebungsdifferenz zwischen zwei Frequenzen f1 und f2, die den Abstand dFrequenz aufweisen. c ist die Lichtgeschwindigkeit.

Dann werden die berechneten Phasenverschiebungsdifferenzen aufsummiert: sumPh(Fn) = Summe dPh(FO... Fn), um die Phasenwerte zu erhalten.

FO bis Fn sind die mehreren unterschiedlichen Frequenzen.

Diese summierten Phasenverschiebungsdifferenzen mit den zugehörigen beim Empfang bestimmten Amplituden können dann als komplexe Werte in eine Fouriertransformation gegeben werden oder es kann mit ihnen über super resolution Verfahren (z.B. MUSIC oder CAPON) in Matrizen eine Spektralschätzung vorgenommen werden. Das Spektrum ist dann das Spektrum an verschieden weiten Pfaden, die das Signal zurücklegt bevor es überlagert an der Empfangsantenne ankommt. Besonders hier ist es besonders vorteilhaft mehrere Antennenpfade bei der Übertragung zu nutzen und mit in die Auswertung einzubeziehen.

Grundsätzlich ist es bevorzugt, für die Funksignallaufzeitmessungen mehrere, insbesondere mindestens drei, bevorzugt mindestens vier, unterschiedliche Antennenpfade, insbesondere nacheinander, zu nutzen. Ein Antennenpfad zeichnet sich durch die zum Senden und die zum Empfangen verwendeten Antennen aus. Wird beispielsweise mit einer ersten Antennen am ersten Objekt gesendet und mit einer zweiten Antenne am zweiten Objekt empfangen, ist dies ein erster Antennenpfad. Wird dann die am ersten Objekt die zum Senden verwendete Antenne auf eine dritte Antenne am ersten Objekt geändert, wird ein anderer, zweiter, Antennenpfad verwendet. Mit Vorteil werden die Funksignallaufzeitmessungen, insbesondere nacheinander, mit unterschiedlichen Antennen am ersten und/oder zweiten Objekt durchgeführt.

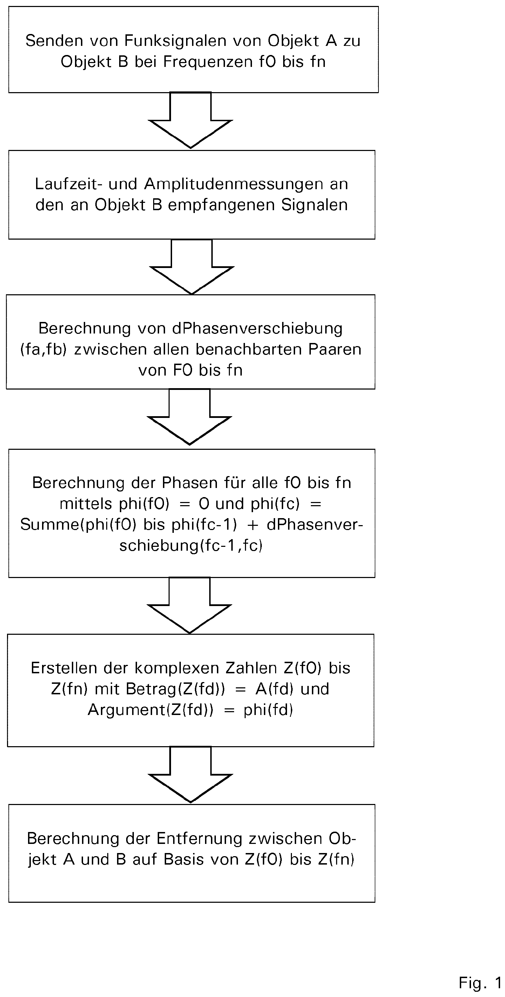

Fig. 1 zeigt reich schematisch, beispielhaft und nicht beschränkend eine mögliche Ausgestaltung des erfindungsgemäßen Verfahrens.

Das Beschriebene Verfahren beginnt mit dem Senden von Funksignalen von Objekt A zu Objekt B bei Frequenzen fO bis fn. Dabei wird zwischen den Frequenzen phasenkohärent ohne Phasensprung gewechselt. Auch beim Empfänger wird zwischen den Frequenzen phasenkohärent ohne Phasensprung gewechselt.

An den empfangenen Funksignalen werden am Objekt B Laufzeit- und Amplitudenmessungen vorgenommen. Aus den Laufzeiten werden äquivalente Phasenverschiebungen berechnet oder mittels dieser oder direkt, mittels

$$\text{dPhasenverschiebung}(f1,f2) = Pi * (RTT(f3)*c) * \text{dFrequenz}(f1,f2) / c$$

Phasenverschiebungsänderungen.

Dabei ist dPhasenverschiebung eine Phasenverschiebungsdifferenz zwischen zwei Frequenzen f1 und f2, die den Abstand dFrequenz aufweisen. c ist die Lichtgeschwindigkeit und RTT die doppelten Signallaufzeit bei der Frequenz fe, ähnlich zu f1 und/oder f2.

Darauf basierend erfolgt die Berechnung der Phasen phi für alle fO bis fn mittels

$$\text{phi}(fO) = O$$

und

$$\text{phi}(fc) = \text{Summe}(\text{phi}(fO)\ \text{bis}\ \text{phi}(fc-1)) + \text{dPhasenverschiebung}(fc-1,fc)$$

Daraus werden komplexe Zahlen Z(f0) bis Z(fn) erstellt mit

$$\text{Betrag}(Z(fd)) = A(fd)$$

und

$$Argument(Z(fd)) \; = \; phi(fd)$$

Anschließend erfolgt die Berechnung der Entfernung zwischen Objekt A und B auf Basis von Z(f0) bis Z(fn).

**Patentansprüche**

1.   Verfahren zur Abstandsbestimmung zwischen zwei Objekten auf Basis einer Mehrzahl von Funksignallaufzeitmessungen bei einer Mehrzahl unterschiedlicher Frequenzen, insbesondere eines Frequenzhoppings, zwischen den zwei Objekten, **dadurch gekennzeichnet, dass** aus den Funksignallaufzeitmessungen Phasenwerte für unterschiedliche Frequenzen und/oder Argumente komplexer Zahlen für unterschiedliche Frequenzen bestimmt werden, die als Phasenmesswerte in mathematischen Verfahren zur phasenbasierten Abstandsberechnung und/oder Argumente komplexer Zahlen in mathematischen Verfahren zur komplexen Abstandsberechnung verwendet werden können oder verwendet werden, um einen Abstand zwischen den zwei Objekten zu bestimmen.

2.   Verfahren nach Anspruch 1, wobei zu der Mehrzahl von Funksignallaufzeitmessungen auch Amplituden- und/oder Leistungsmessungen bei der Mehrzahl unterschiedlicher Frequenzen vorgenommen werden, wobei eine zur Amplitude oder Leistung proportionale Zahl als Amplitude oder Betrag der komplexen Zahl in bekannten mathematischen Verfahren zur phasenbasierten Abstandsberechnung verwendet werden können oder verwendet werden, um einen Abstand zwischen den zwei Objekten zu bestimmen.

3.   Verfahren nach einem der vorstehenden Ansprüche, wobei Funksignallaufzeiten der Funksignallaufzeitmessungen bei, insbesondere benachbarten der Mehrzahl unterschiedlicher, Frequenzen zur Berechnung eines auf den Abstand der Frequenzen der Messungen der Funklaufzeiten normierten Phasenunterschied verwendet werden und das Argument der komplexen Zahlen bei einer Frequenz und/oder der Phasenwert bei einer Frequenz durch bis zu dieser Frequenz aufsummierten Phasenunterschiede gegeben ist.

4.   Verfahren nach Anspruch 2 und 3, wobei aus den komplexen Zahlen ein Vektor und/oder eine Autokorrelationsmatrix gebildet wird, wobei insbesondere eine Entfernung aus dem Vektor und/oder der Autokorrelationsmatrix eine Entfernung zwischen den zwei Objekten berechnet wird.

5.   Verfahren nach einem der vorstehenden Ansprüche, wobei zur Funksignallaufzeitmessung mindestens ein Funksignal mit der Mehrzahl unterschiedlichen Frequenzen von einem ersten der zwei Objekte zu einem zweiten der zwei Objekte und/oder umgekehrt gesendet wird, wobei insbesondere zwischen mindestens zwei der Mehrzahl unterschiedlicher Frequenzen phasenkohärent umgeschaltet wird, insbesondere beim sendenden Objekt und empfangenen Objekt.

6.   Verfahren nach einem der vorstehenden Ansprüche, wobei die Funksignallaufzeitmessungen Messungen nur an Signalen, die von einem ersten der zwei Objekte gesendet und an einem zweiten der zwei Objekte empfangen werden, erfolgen.

7.   Verfahren nach einem der vorstehenden Ansprüche, wobei das zweite oder erste Objekt keine Signale zur Entfernungsbestimmung sendet und/oder das zweite Objekt Signale nur zur Zeit- und/oder Taktsynchronisation sendet.

8.   Verfahren nach einem der vorstehenden Ansprüche, wobei das erste und/oder zweite der zwei Objekte die Signale auf mehreren Frequenzen nacheinander und/oder aufeinanderfolgend, insbesondere unmittelbar aufeinanderfolgend, abstrahlt und/oder wobei die Bandbreite der Signale zu keiner Zeit 50 MHz, insbesondere 25 MHz, übersteigt.

9.   Verfahren nach einem der vorstehenden Ansprüche, wobei vor, nach und/oder während der Durchführung des Verfahrens mindestens eine Zeit- und/oder Takt- und/oder Zeitdriftsynchronisation und/oder -korrektur zwischen den zwei Objekten durchgeführt wird.

10.   Verfahren nach einem der vorstehenden Ansprüche, wobei der Frequenzabstand zwischen zwei aufeinander folgenden der unterschiedlichen Frequenzen mindestens 0,1 MHz und/oder maximal 10 MHz beträgt und/oder die unterschiedlichen Frequenzen mindestens fünf Frequenzen und/oder maximal 200 Frequenzen darstellen und/oder wobei die unterschiedlichen Frequenzen ein Frequenzband von mindestens zwei MHz und/oder maximal 100 MHz überspannen.

11. Verfahren nach einem der vorstehenden Ansprüche, wobei eine Zeitdrift mindestens eines der beiden Objekte bestimmt und/oder korrigiert wird und/oder bei der Berechnung des Abstandes berücksichtigt wird.

12. Verfahren nach einem der vorstehenden Ansprüche, wobei bei der Abstandsbestimmung am zweiten oder ersten Objekt empfangene Signale mit einer empfangenen Leistung unterhalb einer vorbestimmten und/oder, insbesondere aus oder unter Berücksichtigung der empfangenen Signale, ermittelten Leistungsuntergrenze unberücksichtigt bleiben, insbesondere solche Signale unberücksichtigt bleiben, die mehr als 50% unter der mittleren Leistung der empfangenen Signale liegen und/oder wobei bei der Abstandsbestimmung am zweiten oder ersten Objekt empfangene Signale mit einer Leistung oberhalb einer vorbestimmten und/oder, insbesondere aus oder unter Berücksichtigung der empfangenen Signale, ermittelten Leistungsobergrenze unberücksichtigt bleiben.

13. Verfahren nach einem der vorstehenden Ansprüche, wobei das Verfahren nach einem der vorstehenden Verfahren zwischen einer Mehrzahl von Paaren von Objekten durchgeführt, wird, wobei insbesondere ein Objekt jedes Paares ein Objekt ist, dass an allen Paaren beteiligt ist, und wobei die ermittelten Abstände der Paare benutzt werden, um eine Kartierung und/oder Positionsbestimmung durchzuführen.

14. Verwendung von aus Funksignallaufzeitmessungen zwischen zwei Objekten bei unterschiedlichen Frequenzen rechnerisch gewonnen Phasenwerten für die unterschiedlichen Frequenzen und/oder Argumente komplexer Zahlen für die unterschiedlichen Frequenzen zur Bestimmung eines Abstandes zwischen den zwei Objekten mittels phasenbasierten Abstandsberechnungsmethoden und/oder auf komplexen Zahlen basierenden Abstandsberechnungsmethoden.

15. Verwendung nach Anspruch 14, wobei Funksignallaufzeitmessungen aus einer Mehrzahl unterschiedlicher Antennenpfade stammen.

**Claims**

1. Method for determining the distance between two objects on the basis of a plurality of radio signal propagation time measurements at a plurality of different frequencies, in particular a frequency hopping, between the two objects, **characterised in that** phase values for different frequencies and/or arguments of complex numbers for different frequencies are determined from the radio signal propagation time measurements, which can be used as phase measurement values in mathematical methods for phase-based distance calculation and/or arguments of complex numbers in mathematical methods for complex distance calculation or are used to determine a distance between the two objects.

2. Method according to claim 1, wherein amplitude and/or power measurements at the plurality of different frequencies are also made to the plurality of radio signal propagation time measurements, wherein a number proportional to the amplitude or power can be used as the amplitude or magnitude of the complex number in known mathematical methods for phase-based distance calculation or are used to determine a distance between the two objects.

3. Method according to one of the preceding claims, wherein radio signal propagation times of the radio signal propagation time measurements at, in particular neighbouring ones of the plurality of different, frequencies are used to calculate a phase difference normalised to the spacing of the frequencies of the measurements of the radio propagation times and the argument of the complex numbers at a frequency and/or the phase value at a frequency is given by phase differences summed up to this frequency.

4. Method according to claims 2 and 3, wherein a vector and/or an autocorrelation matrix is formed from the complex numbers, wherein in particular a distance between the two objects is calculated from the vector and/or the autocorrelation matrix.

5. Method according to one of the preceding claims, wherein at least one radio signal with the plurality of different frequencies is transmitted from a first of the two objects to a second of the two objects and/or vice versa for the radio signal propagation time measurement, wherein in particular switching between at least two of the plurality of different frequencies takes place in a phase-coherent manner, in particular at the transmitting object and received object.

**6.** Method according to any one of the preceding claims, wherein the radio signal propagation time measurements are performed only on signals transmitted by a first one of the two objects and received at a second one of the two objects.

**7.** Method according to one of the preceding claims, wherein the second or first object does not transmit signals for distance determination and/or the second object transmits signals only for time and/or clock synchronisation.

**8.** Method according to one of the preceding claims, wherein the first and/or second of the two objects radiates the signals at several frequencies one after the other and/or success-sively, in particular directly successively, and/or wherein the bandwidth of the signals does not exceed 50 MHz, in particular 25 MHz, at any time.

**9.** Method according to one of the preceding claims, wherein at least one time and/or clock and/or time-drift synchronisation and/or correction is performed between the two objects before, after and/or during the performance of the method.

**10.** Method according to one of the preceding claims, wherein the frequency spacing between two successive ones of the different frequencies is at least 0.1 MHz and/or at most 10 MHz and/or the different frequencies represent at least five frequencies and/or at most 200 frequencies and/or wherein the different frequencies span a frequency band of at least two MHz and/or at most 100 MHz.

**11.** Method according to one of the preceding claims, wherein a time drift of at least one of the two objects is determined and/or corrected and/or taken into account in the calculation of the distance.

**12.** Method according to one of the preceding claims, wherein, when determining the distance at the second or first object, signals received with a received power below a predetermined lower power limit and/or, in particular, determined from or taking into account the received signals, are not taken into account, in particular signals which are more than 50% below the average power of the received signals are not taken into account and/or wherein, when determining the distance at the second or first object, signals received with a power above a predetermined upper power limit and/or, in particular, determined from or taking into account the received signals, are not taken into account.

**13.** Method according to any one of the preceding claims, wherein the method according to any one of the preceding methods is performed between a plurality of pairs of objects, wherein in particular one object of each pair is an object participating in all pairs, and wherein the determined distances of the pairs are used to perform mapping and/or position determination.

**14.** Use of phase values computed from radio signal propagation time measurements between two objects at different frequencies for the different frequencies and/or arguments of complex numbers for the different frequencies to determine a distance between the two objects by means of phase-based distance calculation methods and/or distance calculation methods based on complex numbers.

**15.** Use according to claim 14, wherein radio signal propagation time measurements originate from a plurality of different antenna paths.

**Revendications**

**1.** Procédé de détermination de la distance entre deux objets sur la base de plusieurs mesures du temps de propagation d'un signal radio à plusieurs fréquences différentes, en particulier un saut de fréquence, entre les deux objets, **caractérisée par le fait que** des valeurs de phase pour différentes fréquences et/ou des arguments de nombres complexes pour différentes fréquences sont déterminés à partir des mesures du temps de propagation du signal radio, qui peuvent être utilisés comme valeurs de mesure de phase dans des procédés mathématiques pour le calcul de distance fondé sur la phase et/ou des arguments de nombres complexes dans des procédés mathématiques pour le calcul de distance complexe ou sont utilisés pour déterminer une distance entre les deux objets.

**2.** Procédé selon la revendication 1, dans lequel des mesures d'amplitude et/ou de puissance à la pluralité de fréquences différentes sont également effectuées à la pluralité de mesures du temps de propagation du signal radio, un nombre proportionnel à l'amplitude ou à la puissance pouvant être utilisé comme amplitude ou magnitude du nombre complexe dans des procédés mathématiques connues pour le calcul de la distance en fonction de la phase ou être utilisé pour déterminer une distance entre les deux objets.

3. Procédé selon l'une des revendications précédentes, dans lequel les temps de propagation du signal radio des mesures du temps de propagation du signal radio à des fréquences, en particulier voisines, de la pluralité de fréquences différentes sont utilisés pour calculer une différence de phase normalisée à l'espacement des fréquences des mesures des temps de propagation radio et l'argument des nombres complexes à une fréquence et/ou la valeur de phase à une fréquence est donné par les différences de phase additionnées jusqu'à cette fréquence.

4. Procédé selon les revendications 2 et 3, dans lequel un vecteur et/ou une matrice d'autocorrélation sont formés à partir des nombres complexes, dans lequel en particulier une distance entre les deux objets est calculée à partir du vecteur et/ou de la matrice d'autocorrélation.

5. Procédé selon l'une des revendications précédentes, dans lequel au moins un signal radio avec la pluralité de fréquences différentes est transmis d'un premier des deux objets à un second des deux objets et/ou vice versa pour la mesure du temps de propagation du signal radio , dans lequel en particulier la commutation entre au moins deux de la pluralité de fréquences différentes a lieu de manière cohérente en phase, en particulier au niveau de l'objet émetteur et de l'objet récepteur.

6. Procédé selon l'une des revendications précédentes, dans lequel les mesures du temps de propagation des signaux radio sont effectuées uniquement sur les signaux transmis par un premier des deux objets et reçus par un second des deux objets.

7. Procédé selon l'une des revendications précédentes, dans lequel le second ou le premier objet ne transmet pas de signaux pour la détermination de la distance et/ou le second objet ne transmet des signaux que pour la synchronisation du temps et/ou de l'horloge.

8. Procédé selon l'une des revendications précédentes, dans lequel le premier et/ou le second des deux objets émet les signaux à plusieurs fréquences l'une après l'autre et/ou successivement, en particulier directement successivement, et/ou dans lequel la largeur de bande des signaux ne dépasse pas 50 MHz, en particulier 25 MHz, à tout moment.

9. Procédé selon l'une des revendications précédentes, dans lequel au moins une synchronisation et/ou une correction du temps et/ou de l'horloge et/ou de la dérive temporelle est effectuée entre les deux objets avant, après et/ou pendant l'exécution du procédé.

10. Procédé selon l'une des revendications précédentes, dans lequel l'espacement entre deux fréquences successives est d'au moins 0,1 MHz et/ou d'au plus 10 MHz et/ou les différentes fréquences représentent au moins cinq fréquences et/ou au plus 200 fréquences et/ou dans lequel les différentes fréquences couvrent une bande de fréquence d'au moins deux MHz et/ou d'au plus 100 MHz.

11. Procédé selon l'une des revendications précédentes, dans lequel une dérive temporelle d'au moins un des deux objets est déterminée et/ou corrigée et/ou prise en compte dans le calcul de la distance.

12. Procédé selon l'une des revendications précédentes, dans lequel, lors de la détermination de la distance au second ou au premier objet, les signaux reçus avec une puissance inférieure à une limite de puissance inférieure prédéterminée et/ou, en particulier, déterminée à partir des signaux reçus ou en tenant compte de ceux-ci, ne sont pas pris en compte, notamment les signaux qui sont inférieurs de plus de 50 % à la puissance moyenne des signaux reçus, et/ou dans lequel, lors de la détermination de la distance au second ou au premier objet, les signaux reçus avec une puissance supérieure à une limite de puissance supérieure prédéterminée et/ou, en particulier, déterminée à partir des signaux reçus ou en tenant compte de ceux-ci, ne sont pas pris en compte.

13. Procédé selon l'une des revendications précédentes, dans lequel le procédé selon l'un des procédés précédents est exécuté entre plusieurs paires d'objets, dans lequel en particulier un objet de chaque paire est un objet participant à toutes les paires, et dans lequel les distances déterminées des paires sont utilisées pour effectuer la cartographie et/ou la détermination de la position.

14. Utilisation de valeurs de phase calculées à partir de mesures de temps de propagation de signaux radio entre deux objets à différentes fréquences pour les différentes fréquences et/ou d'arguments de nombres complexes pour les différentes fréquences afin de déterminer une distance entre les deux objets au moyen de procédés de calcul de distance fondées sur la phase et/ou de procédés de calcul de distance fondées sur des nombres complexes.

**15.** Utilisation selon la revendication 14, dans laquelle les mesures du temps de propagation du signal radio proviennent d'une pluralité de chemins d'antenne différents.

Senden von Funksignalen von Objekt A zu
Objekt B bei Frequenzen f0 bis fn

Laufzeit- und Amplitudenmessungen an
den an Objekt B empfangenen Signalen

Berechnung von dPhasenverschiebung
(fa,fb) zwischen allen benachbarten Paaren
von F0 bis fn

Berechnung der Phasen für alle f0 bis fn
mittels phi(f0) = 0 und phi(fc) =
Summe(phi(f0) bis phi(fc-1) + dPhasenver-
schiebung(fc-1,fc)

Erstellen der komplexen Zahlen Z(f0) bis
Z(fn) mit Betrag(Z(fd)) = A(fd) und
Argument(Z(fd)) = phi(fd)

Berechnung der Entfernung zwischen Objekt A und B auf Basis von Z(f0) bis Z(fn)

Fig. 1

**IN DER BESCHREIBUNG AUFGEFÜHRTE DOKUMENTE**

**In der Beschreibung aufgeführte Patentdokumente**

- EP 3564707 A
- EP 3502736 A1
- EP 2212705 BE
- EP 2525238 A1
- WO 2020060686 A1